# EUROPÄISCHE PATENTANMELDUNG

(11) **EP 3 511 696 A1**
(43) Veröffentlichungstag der Anmeldung: **17.07.2019**
(21) Anmeldenummer: 18000992.0
(22) Anmeldetag: 21.12.2018
(51) Int. Cl.: G01N 21/25, D06F 58/28

(54) **VERFAHREN ZUR ERMITTLUNG MINDESTENS EINES KRITERIUMS TEXTILER GEGENSTÄNDE**

(30) Priorität: 10.01.2018 DE 102018000125; 12.01.2018 DE 102018000196
(71) Anmelder: Herbert Kannegiesser GmbH, 32602 Vlotho (DE)
(72) Erfinder: Bringewatt, Wilhelm, 32457 Porta Westfalica (DE); Heinz, Engelbert, 32602 Vlotho (DE)
(74) Vertreter: Möller, Friedrich

(57) **Zusammenfassung**

Wäschestücke (10) oder andere textile Gegenstände werden anhand entsprechender Kriterien sortiert oder behandelt, insbesondere gereinigt bzw. gewaschen. Diese Kriterien müssen vor dem Sortieren oder einer sonstigen Behandlung ermittelt werden. Das geschieht bisher manuell oder anhand von an den Wäschestücken (10) vorgesehenen Datenträgern. Diese Art der Ermittlung der betreffenden Kriterien ist arbeitsaufwendig oder unvollständig, wenn zum Beispiel der Datenträger des betreffenden Wäschestücks (10) unleserlich ist oder fehlt.

Die Erfindung sieht es vor, die betreffenden Kriterien automatisch durch mindestens eine bildgebende Einrichtung zu erfassen, wobei die Wäschestücke (10) einer UV-Strahlung oder einer sonstigen unsichtbaren elektro-magnetischen Strahlung ausgesetzt werden. Diese UV-Strahlung macht für die bildgebende Einrichtung Eigenschaften der Wäschestücke (10) sichtbar, die zur Ermittlung zumindest solcher Kriterien der Wäschestücke (10) dienen, die für die Sortierung und/oder nachfolgende Behandlung derselben benötigt werden.

## Beschreibung

Die Erfindung betrifft ein Verfahren zur Ermittlung mindestens eines Kriteriums textiler Gegenstände gemäß dem Oberbegriff des Anspruchs 1.

Textile Gegenstände werden insbesondere in Wäschereien, chemischen Reinigungen und textilverarbeitenden Betrieben auf verschiedene Weisen gehandhabt und/oder behandelt. Beispielsweise werden die textilen Gegenstände gereinigt, gewaschen, getrocknet, gebügelt, gemangelt, gefinisht, kontrolliert und/oder gefaltet sowie gestapelt. Vor zumindest einigen der vorstehend geschilderten Behandlungsvorgängen findet auch eine Sortierung der textilen Wäschestücke statt.

Die einzelnen Behandlungen der textilen Gegenstände, vor allem auch das Sortieren derselben, erfolgen in Abhängigkeit von einem Kriterium oder auch mehreren Kriterien der textilen Gegenstände. Ein wesentliches Kriterium ist die Art der textilen Gegenstände, insbesondere die Gewebeart. Es ist bei der Behandlung zwischen textilen Gegenständen aus Kunstfasern, Naturfasern oder Mischgewebe zu unterscheiden. Vielfach ist auch der Anteil der Kunstfasern bzw, Naturfasern im Gewebe des jeweiligen textilen Gegenstands von Bedeutung. Die textilen Gegenstände werden dementsprechend sortiert und/oder erfahren eine für ihre spezifische Gewebeart erforderliche bzw. zulässige Behandlung. Außerdem sind zumindest einige Behandlungsmaschinen so voreinzustellen, dass von diesen die Wäschestücke in einer für das jeweilige Gewebe geeigneten Art behandelt werden.

Ein weiteres wichtiges Kriterium textiler Gegenstände ist ihr Gewebe, insbesondere der Weißegrad. Danach ist ermittelbar, ob die textilen Gegenstände den insoweit an sie gestellten Anforderungen oder Vorgaben entsprechen. Zweckmäßigerweise erfolgt dieses durch eine Kontrolle vor Auslieferung der behandelten textilen Gegenstände.

Die vorstehend beschriebene Ermittlung ausgewählter Kriterien textiler Gegenstände, insbesondere Bekleidungsstücke, Flachwäsche und/oder sonstige Wäsche, findet bislang manuell oder günstigstenfalls teilautomatisch statt.

Der Erfindung liegt die Aufgabe zugrunde, ein Verfahren zur automatischen Ermittlung mindestens eines Kriteriums textiler Gegenstände zu schaffen.

Ein Verfahren zur Lösung dieser Aufgabe weist die Maßnahmen des Anspruchs 1 auf. Demnach wird ein von wenigstens einer bildgebenden Einrichtung erfasster Bereich des jeweiligen textilen Gegenstands zumindest während der Erzeugung der Bilddaten einer für das menschliche Auge unsichtbaren elektro-magnetischen Strahlung ausgesetzt. Durch diese Bestrahlung kann die bildgebende Einrichtung mehr erfassen als vom menschlichen Auge sichtbar. Die bildgebende Einrichtung kann so Bilddaten erzeugen, woraus sich mindestens ein solches Kriterium des betrachteten textilen Gegenstands ermitteln lässt, was ohne die erfindungsgemäße Bestrahlung des jeweiligen textilen Gegenstands mit einer unsichtbaren elektro-magnetischen Bestrahlung nicht von der bildgebenden Einrichtung erfassbar wäre.

Bevorzugt wird als unsichtbare elektro-magnetische Strahlung hochfrequente elektro-magnetische Strahlung, insbesondere Ultraviolett-Strahlung (im Folgenden nur kurz "UV-Strahlung" genannt), eingesetzt. Dadurch können von der bildgebenden Einrichtung Bilddaten erzeugt werden, die bei der Beleuchtung des von der bildgebenden Einrichtung zu erfassenden Bereichs des jeweiligen textilen Gegenstands mit sichtbarer elektro-magnetischer Strahlung, insbesondere Tages- oder Kunstlicht, nicht erzeugbar wären.

Das Verfahren kann so weitergebildet sein, dass die elektro-magnetische Strahlung direkt und/oder indirekt auf den von der bildgebenden Einrichtung erfassten Bereich des jeweiligen textilen Gegenstands gerichtet wird. Bei der indirekten Einwirkung der unsichtbaren elektro-magnetischen Strahlung auf den textilen Gegenstand ist die unsichtbare elektro-magnetische Strahlung auf eine von der bildgebenden Einrichtung weggerichteten Seite, insbesondere Rückseite, des textilen Gegenstands gerichtet. Es wird dann von der unsichtbaren elektro-magnetischen Strahlung der textile Gegenstand durchdrungen und so quasi durchstrahlt und/oder durchleuchtet. Überwiegend führen sowohl die direkte als auch die indirekte Bestrahlung des jeweiligen textilen Gegenstands zu gleichen Ergebnissen. Dann wird die direkte bzw. indirekte Bestrahlung unter dem Gesichtspunkt gewählt, wo sich eine entsprechende Strahlungsquelle am besten unterbringen lässt. Es sind aber auch Fälle denkbar, dass bestimmte Kriterien besser durch eine indirekte Bestrahlung als durch eine direkte Bestrahlung (oder auch umgekehrt) für die bildgebende Einrichtung sichtbar gemacht werden können. Dann wird die Wahl der direkten oder indirekten Bestrahlung vom jeweiligen Kriterium abhängig gemacht. Um möglichst viele Kriterien ermitteln zu können, und zwar solche, die durch eine indirekte Bestrahlung und solche die durch eine direkte Bestrahlung ermittelbar sind, können beide Seiten des jeweiligen textilen Gegenstands gleichzeitig oder nacheinander mit unsichtbarer elektro-magnetischer Strahlung beaufschlagt werden.

Eine vorteilhafte Ausgestaltung des Verfahrens sieht es vor, dass von der mindestens einen bildgebenden Einrichtung nur oder auch die Emission, Absorption, Reflektion, Transmission und/oder Fluoreszenz der unsichtbaren elektro-magnetischen Strahlung erfasst wird. Das geschieht vorzugsweise bildhaft durch von der bildgebenden Einrichtung erzeugte Bilddaten, die Auskünfte über die Farbe, den Kontrast, den Helligkeitsunterschied und/oder das Muster des jeweils betrachteten textilen Gegenstands liefern. Die Farbe liefert ein Kriterium darüber, ob es sich um bunte textile Gegenstände oder weiße textile Gegenstände handelt. Der Kontrast liefert insbesondere Kriterien für den Weißheitsgrad oder die Farbechtheit des textilen Gegenstands. Anhand des Musters kann mindestens ein Kriterium für die Art des Gewebes, vor allem Mischgewebes, Flecken und/oder Löcher erlangt werden.

Besonders bevorzugt ist das erfindungsgemäße Verfahren geeignet, um anhand der von der mindestens einen bildgebenden Einrichtung erhaltenen Bilddaten des nur oder auch mit unsichtbaren elektro-magnetischen Strahlen bestrahlten textilen Gegenstands zu ermitteln, ob der textile Gegenstand aus Naturfasern, Kunststofffasern oder einem Gemisch aus beidem, ein sogenanntes Mischgewebe, besteht. Die daraus erhaltenen Kenntnisse bzw. Kriterien sind wichtig für das Sortieren und/oder die nachfolgende Behandlung des jeweiligen textilen Gegenstands. Es kann so automatisch eine Sortierung und/oder Einstellung von Behandlungseinrichtungen für die nachfolgende Behandlung des jeweiligen textilen Gegenstands automatisch zuverlässig getroffen werden.

Die nach dem Verfahren erfolgende automatische Erkennung der Gewebeart des jeweiligen textilen Gegenstands beruht darauf, dass weiße Naturfasern, insbesondere Baumwollfasern, mit einem Bleichmittel gebleicht sind. Dieses Bleichmittel ist vom menschlichen Auge und bei Beleuchtung mit sichtbarem Licht nicht erkennbar. Infolge der elektro-magnetischen Strahlung, insbesondere UV-Strahlung, wird aber das Bleichmittel der Naturfasern für die bildgebende Einrichtung sichtbar gemacht. Es wird dazu vor allem die weiße Naturfaser infolge der Einwirkung der unsichtbaren elektro-magnetischen Strahlung für die bildgebende Einrichtung heller sichtbar. Dann erscheinen beim Mischgewebe gebleichte Naturfasern heller als Kunstfasern.

Aufgrund der Bestrahlung mit unsichtbaren elektro-magnetischen Strahlen, insbesondere UV-Strahlung, erscheinen unterschiedliche Farben für die mindestens eine bildgebende Einrichtung insbesondere unterschiedlich hell.

Wenn die mindestens eine bildgebende Einrichtung bzw. die von dieser erzeugten Bilddaten ein Muster hellerer und dunklerer Fasern oder Fäden aufnimmt, deutet das auf ein Mischgewebe hin. Wenn hingegen ein weißer textiler Gegenstand ein im Wesentlichen homogenes Bild abgibt, deutet das auf ein reines Kunstfasergewebe oder Naturfasergewebe hin. Aufgrund von Farb- und/oder Helligkeitsunterschieden bzw. Mustern hellerer und dunklerer Fäden oder Fasern kann automatisch aus den von der mindestens einen bildgebenden Einrichtung erzeugten Bilddaten abgeleitet werden, ob es sich beim jeweils betrachteten textilen Gegenstand um ein Kunstfaser-, ein Naturfaser- oder ein Mischgewebe handelt.

Bevorzugte Ausführungsbeispiele von Vorrichtungen zur Realisierung des erfindungsgemäßen Verfahrens werden nachfolgend anhand der Zeichnung näher erläutert. In dieser zeigen:
- Fig. 1: eine schematische Darstellung eines Teils einer Vorrichtung zur Durchführung des erfindungsgemäßen Verfahrens,
- Fig. 2: ein zweites Ausführungsbeispiel einer Vorrichtung zur Durchführung des erfindungsgemäßen Verfahrens in einer schematischen Darstellung analog zur Fig. 1, und
- Fig. 3: ein drittes Ausführungsbeispiel einer Vorrichtung zur Durchführung des erfindungsgemäßen Verfahrens in einer Ansicht analog zu den Fig. 1 und 2.

Die Figuren zeigen Teile verschiedener Vorrichtungen zur Durchführung des erfindungsgemäßen Verfahrens und symbolisch einen textilen Gegenstand, von dem im Folgenden davon ausgegangen wird, dass es sich dabei um ein Wäschestück 10 handelt.

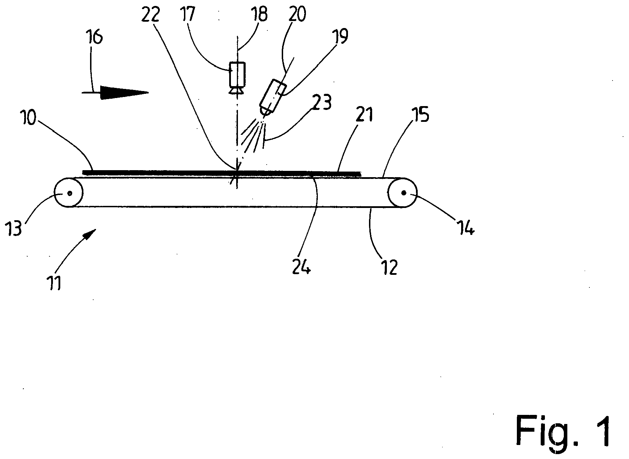

Beim Ausführungsbeispiel der Fig. 1 verfügt die Vorrichtung über einen Förderer. Dieser ist im vorliegenden Fall als ein Stetigförderer, nämlich ein Gurtförderer 11, mit einem umlaufenden Fördergurt 12 ausgebildet. Der Fördergurt 12 ist um zwei parallele Umlenktrommeln 13, 14 geführt, von denen eine antreibbar ist. Die Umlenktrommeln 13, 14 definieren den Anfang und das Ende des Gurtförderers 11. Auf einem zwischen den Umlenktrommeln 13, 14 verlaufenden Obertrum 15 des Fördergurts 12 liegt das Wäschestück 10 im vorzugsweise ausgebreiteten Zustand auf. Das Wäschestück 10 wird vom Gurtförderer 11 in einer durch einen Pfeil symbolisierten Förderrichtung 16 von der vorderen Umlenktrommel 13 zur hinteren Umlenktrommel 14 transportiert, und zwar vorzugsweise kontinuierlich.

Oberhalb des auf dem Gurtförderer 11 liegenden Wäschestücks 10 ist etwa mittig zwischen den Umlenktrommeln 13, 14 eine bildgebende Einrichtung vorgesehen, bei der es sich beispielsweise um eine Kamera handelt, die auch unsichtbare elektro-magnetische Strahlung, insbesondere UV-Strahlung, aufnehmen und verarbeiten kann. Je nachdem, welche Kriterien des Wäschestücks 10 erfasst werden sollen, kann es sich bei der Kamera 17 um eine zwei- oder dreidimensionale Bilddaten liefernde Schwarz/Weiß-Kamera oder eine Farb-Kamera handeln. Entscheidend ist, dass die Kamera 17 geeignet ist, für das menschliche Auge unsichtbare UV-Strahlen oder vergleichbare elektro-magnetische Strahlung zu erfassen bzw. zu detektieren und auch davon Bilddaten zu liefern. Eine optische Achse 18 der Kamera 17, die gleichzeitig eine Längsmittelachse der Kamera 17 sein kann, verläuft im gezeigten Ausführungsbeispiel senkrecht zum Obertrum 15 des Gurtförderers 11 und damit auch senkrecht zur Fläche des ausgebreitet auf dem Obertrum 15 liegenden Wäschestücks 10.

Der Kamera 17 ist eine Einrichtung zur Erzeugung unsichtbarer elektro-magnetischer Wellen bzw. Strahlung zugeordnet, insbesondere eine solche Einrichtung, die ultraviolette Strahlung erzeugt, also einen UV-Strahler 19. Im vorliegenden Ausführungsbeispiel ist der UV-Strahler 19 oberhalb des Wäschestücks 10 neben der Kamera 17 angeordnet. Der UV-Strahler 19 ist dabei so ausgerichtet, dass seine Strahlungshauptachse 20 dort auf die Oberseite 21 des Wäschestücks 10 trifft, wo auch die optische Achse 18 der Kamera 17 auf die Oberseite 21 des Wäschestücks 10 gerichtet ist. Dadurch liegt ein Schnittpunkt 22 der optischen Achse 18 der Kamera 17 und der Strahlungshauptachse 20 des UV-Strahlers 19 auf der Oberseite 21 des Wäschestücks 10. Der UV-Strahler 19 ist so ausgebildet bzw. mit einer solchen Optik versehen, dass die von ihm ausgehenden UV-Strahlen 23 einen Bereich um den Schnittpunkt 22 herum mit UV-Strahlen 23 beaufschlagen, der mindestens so groß ist wie derjenige Bereich um den Schnittpunkt 22, der von der Kamera 17 erfasst bzw. aufgenommen oder abgebildet wird.

Es sind Abwandlungen des Ausführungsbeispiels der Fig. 1 denkbar, bei denen die optische Achse 18 nicht senkrecht auf das Wäschestück 10 trifft und stattdessen die Strahlungshauptachse 20 senkrecht auf das Wäschestück 10 gerichtet ist. Auch ist es denkbar, dass sowohl die optische Achse 18 als auch die Strahlungshauptachse 20 unter einem bestimmten gleichen Winkel oder auch unterschiedlichen Winkeln auf das Wäschestück 10 gerichtet sind. Bei den vorstehend genannten Alternativen ist vorzugsweise aber stets vorgesehen, dass sich die optische Achse 18 und die Strahlungshauptachse 20 in einem Schnittpunkt 22 auf der Oberseite 21 des Wäschestücks 10 treffen oder sich hier schneiden.

Es ist alternativ auch denkbar, dass der Kamera 17 mehrere UV-Strahler 19 zugeordnet sind, die sich allesamt auf derjenigen Seite des Wäschestücks 10 befinden, auf der auch die Kamera 17 angeordnet ist, also sowohl die Kamera 17 als auch die UV-Strahler 19 von der gleichen Seite auf die Oberseite 21 des Wäschestücks 10 gerichtet sind. Denkbar ist es auch, der Kamera 17 mindestens eine sichtbares Licht abgebende Leuchteinrichtung, insbesondere Lampe, zuzuordnen. Eine solche Lampe kann auch von oben auf das Wäschestück 10 leuchten. Gegebenenfalls kann mindestens eine solche Lampe aber auch unter dem Wäschestück 10 bzw. unter dem Gurtförderer 11 angeordnet sein, um eine Unterseite 24 des Wäschestücks 10 zu beleuchten und/oder zu durchleuchten.

Falls das Wäschestück 10 einer Sortierung unterzogen werden soll, ist vor dem Gurtförderer 10 direkt oder mit einem zwischengeschalteten Förderer eine Vereinzelungseinrichtung oder Wäschevorbereitungsstation angeordnet. Hinter dem Gurtförderer 11 ist dann eine Sortiereinrichtung vorgesehen. Nachdem von der Kamera 17 mindestens ein Kriterium, das als Sortierkriterium dienen soll, ermittelt worden ist und nach Auswertung der von der Kamera 17 erfassten Bilddaten, wird nach diesem mindestens einen Sortierkriterium das Wäschestück 10 in der auf den Gurtförderer 11 folgenden Sortierstation nach dem betreffenden Sortierkriterium automatisch sortiert. Es ist alternativ denkbar, die in der Fig. 1 gezeigte Vorrichtung mit dem Gurtförderer 11, der Kamera 17 und dem UV-Strahler 19 zwischen einer Mangeleingabemaschine und einer Mangel vorzusehen. Von der Mangeleingabemaschine wird dann das jeweilige Wäschestück 10 vor dem Gurtförderer 11 ausgebreitet und im ausgebreiteten Zustand auf das Obertrum 15 des Gurtförderers 11 abgelegt. Es wird dann von der Kamera 17 im Bereich des Gurtförderers 11 mindestens ein für das nachfolgende Mangeln erforderliche Kriterium ermittelt, beispielsweise die Art des Gewebes des Wäschestücks 10, wonach Rückschlüsse auf das Gewicht desselben und/oder die Gewebeart und Struktur gezogen werden können. Dementsprechend kann dann automatisch in Abhängigkeit von der Auswertung der von der Kamera 17 aufgenommenen Bilddaten die Mangel bzw. ihre Steuerung eingestellt bzw. justiert werden. Es ist so ein optimales Mangeln des Wäschestücks 10 in einer an das Gewebe und die Gewebeart des Wäschestücks angepassten Weise gewährleistet, ohne dass dazu manuelle Einstellungen der Mangel vorzunehmen sind. Vor allem ist es durch die Ermittlung der betreffenden Mangelkriterien für jedes Wäschestück 10 möglich, die Mangel im Mischbetrieb zu betreiben, also nicht postenweise gleichartige Wäschestücke 10 zu mangeln, sondern abwechselnd bzw. durcheinander Wäschestücke 10 unterschiedlicher Art, insbesondere unterschiedlicher Materialien und/ oder Gewebe.

Es ist auch denkbar, anstatt einer Mangel hinter dem Gurtförderer 11 einen Finisher, insbesondere Tunnelfinisher, anzuordnen, der dann automatisch anhand der von der Kamera 17 aufgenommenen Kriterien des Wäschestücks 10 so gesteuert wird, dass das Wäschestück 10 danach optimal und vor allem beschädigungslos gefinisht werden kann.

Eine weitere alternative Anwendungsmöglichkeit für die von der Kamera 17 gewonnenen Kriterien ist die automatische Einstellung und/oder Steuerung bzw. Regelung eines Trockners. Dann ist der Gurtförderer 11 mit der Kamera 17 und dem mindestens einen dieser zugeordneten UV-Strahler 19 vor einem oder auch mehreren Trocknern vorgesehen.

Eine weitere Einsatzmöglichkeit der Erfindung sieht es vor, den Gurtförderer 11 mit der Kamera 17 und dem mindestens einen dieser zugeordneten UV-Strahler 19 vor einer Waschmaschine, insbesondere Durchlaufwaschmaschine, anzuordnen. Auf diese Weise kann jedes Wäschestück 10 vor der Zufuhr zur Waschmaschine dahingehend kontrolliert werden, ob es die Kriterien zum Waschen in einem Waschposten erfüllt oder in den vorzugsweise vorher sortierten Posten mehrerer Wäschestücke ein solches Wäschestück 10 gelangt ist, das zusammen mit den anderen Wäschestücken des Postens nicht gewaschen werden darf, weil es nicht die für den betreffenden Posten vorgesehenen Kriterien erfüllt, beispielsweise sich ein weißes Wäschestück 10 in dem gemeinsam zu waschenden Posten von Wäschestücken aus Buntwäsche befindet.

Schließlich ist es denkbar, den Gurtförderer 11 hinter einer Mangel oder auch einer anderen Wäschebehandlungseinrichtung vorzusehen, um das jeweils gemangelte oder in einer sonstigen Weise behandelte Wäschestück 10 dahingehend zu kontrollieren, ob es noch einen ausreichenden Weißegrad aufweist. Wird von der Kamera 17 in Verbindung mit dem dieser zugeordneten mindestens einen UV-Strahler 19 festgestellt, dass das Wäschestück 10 beispielsweise aufgrund seines Alters eine Graufärbung erreicht hat, die einen vorgegebenen Grenzwert überschreitet, wird dieses Wäschestück 10 ausgesondert oder gegebenenfalls entsorgt, bevor es wieder in Umlauf gebracht wird. In diesem Falle übt die Kamera 17 mit dem mindestens einen dieser zugeordneten UV-Strahler 19 eine Kontrollfunktion aus.

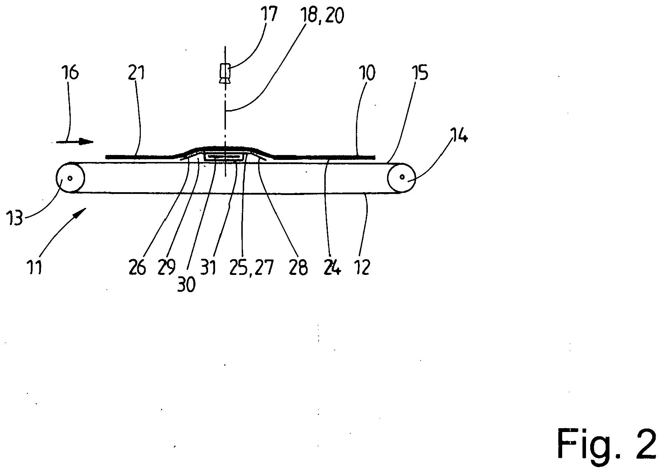

Die Fig. 2 zeigt ein zweites Ausführungsbeispiel der Vorrichtung, was hinsichtlich des Gurtförderers 11 und der Kamera 17 derjenigen der Fig. 1 entspricht. Demzufolge werden für gleiche Teile gleiche Bezugsziffern verwendet. Bei der Vorrichtung der Fig. 2 wird das ausgebreitet auf dem Obertrum 15 des Gurtförderers 11 liegende Wäschestück 10 vom Gurtförderer 11 auch vorzugsweise kontinuierlich in Förderrichtung 16 transportiert. Oberhalb des Gurtförderers 11 ist auch bei diesem Ausführungsbeispiel die Kamera 17 angeordnet, und zwar so, dass ihre optische Achse 18 das Obertrum 15 und damit die Oberseite 21 des Wäschestücks 10 in etwa senkrecht schneidet.

Bei der Vorrichtung der Fig. 2 befindet sich etwa mittig oberhalb des Obertrums 15 des Fördergurts 12 ein ortsfestes Leitblech 25. Dieses ist im Querschnitt etwa trapezförmig ausgebildet mit einer in Förderrichtung 16 gesehen ansteigenden Schräge 26, einem mittleren, mit parallelem Abstand über den Fördergurt 12 verlaufenden Mittenabschnitt 27 und einer anschließend abfallenden Schräge 28. Dadurch entsteht unter dem Leitblech 25 ein Raum 29 zwischen dem Leitblech 25 und dem Obertrum 15 des Fördergurts 12. Das Leitblech 25 ist an einer solchen Stelle über dem Obertrum 15 angeordnet, dass die senkrechte optische Achse 18 der Kamera 17 etwa durch die Mitte des Leitblechs 25 verläuft.

In dem Raum 29 unter dem Leitblech 25 ist im gezeigten Ausführungsbeispiel ein UV-Strahler 30 angeordnet, der gegebenenfalls von einem Array mehrerer neben- und hintereinander angeordneter Einzelstrahler gebildet sein kann. Der UV-Strahler 30 ist in einem Gehäuse 31 untergebracht, dessen Unterseite vom Obertrum 15 etwas beabstandet ist, so dass es mit dem in Förderrichtung 16 vorbeilaufenden Obertrum 15 nicht in Kontakt kommt und außerdem den UV-Strahler 30 bzw. seine Einzelstrahler vor allem gegen einen Kontakt mit dem umlaufenden Fördergurt 12 schützt. Die Oberseite des Gehäuses 31 kann offen sein. Im gezeigten Ausführungsbeispiel ist die Oberseite des Gehäuses 31 vom Mittenabschnitt 27 des Leitbleichs gebildet. Der Mittenabschnitt 27 ist dann bevorzugt mit Öffnungen, insbesondere einer Perforation, versehen. Dadurch wird eine Durchlässigkeit des Gehäuses 39 und des Leitblechs 25 für nicht sichtbare, elektro-magnetische Strahlen, insbesondere UV-Strahlen, des UV-Strahlers 30 gewährleistet. Dadurch können die UV-Strahlen des UV-Strahlers 30 von der Unterseite 24 her an das Wäschestück 10 gelangen und dieses von der Unterseite 24 her bestrahlen.

Die Strahlungsintensität des mindestens einen UV-Strahlers 30 ist so gewählt, dass die hiervon ausgehenden UV-Strahlen nicht nur auf die Unterseite 24 des Wäschestücks 10 treffen, sondern dieses auch durchdringen. Dadurch zeigen die von der Unterseite 24 des Wäschestücks 10 ausgehenden UV-Strahlen auch an der Oberseite 21 des Wäschestücks eine Wirkung, so dass von der unterseitigen Bestrahlung des Wäschestücks 10 stammende UV-Strahlen von der Kamera 17 erfassbar sind und diesen Bilddaten liefern kann, die von den unsichtbaren elektro-magnetischen Wellen, insbesondere hochfrequenten elektro-magnetischen UV-Strahlen 30, beeinflusst sind.

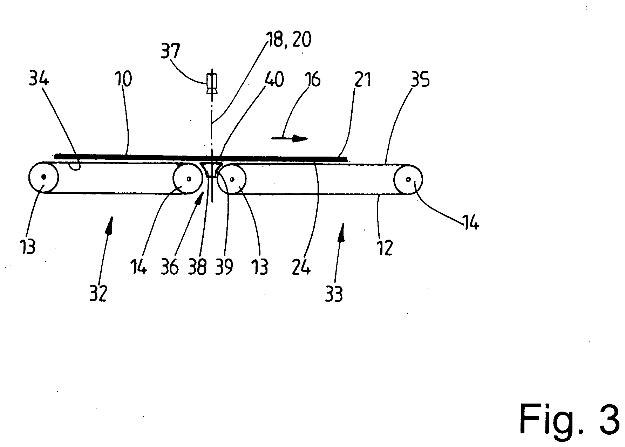

Beim Ausführungsbeispiel der Fig. 3 sind zwei in Förderrichtung 16 aufeinanderfolgende Gurtförderer 32 und 33 vorgesehen. Die beiden Gurtförderer 32, 33 sind im gezeigten Ausführungsbeispiel unterschiedlich lang ausgebildet. Sie können aber auch gleich lang sein. Im Übrigen sind die Gurtförderer 32, 33 gleich ausgebildet. Die Gurtförderer 32, 33 folgen derart aufeinander, dass ihre Obertrume 34, 35 in einer gemeinsamen Ebene liegen. Diese Ebene verläuft horizontal, kann aber auch - wie gegebenenfalls auch bei den zuvor beschriebenen Ausführungsbeispielen - in Förderrichtung 16 leicht ansteigend oder leicht abfallend verlaufen. Zwischen zueinander gerichteten, benachbarten Umlenktrommeln 14 und 13 der aufeinanderfolgenden Gurtförderer 32, 33 ist durch eine geringfügige Beabstandung der Gurtförderer 32, 33 ein schmaler Spalt 36 gebildet.

Senkrecht oberhalb des über die Gurtförderer 32, 33 transportierten Wäschestücks 10 ist eine Kamera 37 angeordnet. Die Kamera 37 befindet sich über dem Spalt 36 zwischen den aufeinanderfolgenden Gurtförderern 32, 33, und zwar so, dass eine senkrechte optische Achse 18 der Kamera 37 mittig durch den Spalt 36 bzw. mittig zwischen den benachbarten Umlenktrommeln 13, 14 der aufeinanderfolgenden Gurtförderer 32, 33 hindurch verläuft.

Ein UV-Strahler 38 ist bei der in der Fig. 3 gezeigten Vorrichtung unter dem Wäschestück 10 angeordnet, und zwar im Spalt 36 zwischen den aufeinanderfolgenden Gurtförderern 32, 33. Ein Gehäuse 39 des UV-Strahlers 38 ist im (von der Seite gesehenen) Profil so ausgebildet, dass dieses an der Kontur des Spalts 36 angepasst ist. Im gezeigten Ausführungsbeispiel entsprechen das Profil bzw. der Querschnitt des Gehäuses 39 der Kontur der zum Wäschestück 10 gerichteten oberen Hälfte des Spalts 36. Dabei ist das Profil des Gehäuses 39 etwas kleiner als die obere Häifte des Spalts 36, so dass die Umlenktrommeln 13, 14 mit den außen um dieselben herumlaufenden Abschnitten der Fördergurte 12 das Gehäuse 39 des UV-Strahlers 38 nicht berühren. Durch die zuvor beschriebene Anordnung des UV-Strahlers 38 im Spalt 36 zwischen den aufeinanderfolgenden Gurtförderern 32 und 33 liegt auch eine senkrechte Mittelachse des UV-Strahlers 38 und/oder seines Gehäuses 39 auf der optischen Achse 18 der Kamera 37. Eine ebene Oberseite 40 des Gehäuses 39 des UV-Strahlers 38 liegt in der Ebene der beiden Obertrume 34 und 35. Dadurch bildet die ebene Oberseite 40 des Gehäuses 39 des UV-Strahlers 38 zusammen mit den Obertrumen 34 und 35 der beiden aufeinanderfolgenden Gurtförderer 32, 33 eine Ebene. Dadurch wird sichergestellt, dass das Wäschestück 10 flachliegend über den Spalt 36 gestützt durch die Oberseite 40 des Gehäuses 39 hinwegläuft.

Der UV-Strahler 38 ist so ausgebildet, dass die von ihm ausgesandten Strahlen nicht auf die Unterseite 24 des Wäschestücks 10 gerichtet sind, sondern das Wäschestück 10 auch durchdringen. Dadurch machen die unsichtbaren elektro-magnetischen Strahlen die Fasern des Gewebes des Wäschestücks 10, und zwar Naturfasern heller als Kunstfasern, für die Kamera 37 sichtbar.

Es ist denkbar, auf der Seite der Kamera 37 ein oder mehrere Lichtquellen vorzusehen, die mindestens im Erfassungsbereich der Kamera 37 die Oberseite 21 des Wäschestücks 10 mit sichtbarem Licht beleuchten. Alternativ oder zusätzlich kann es auch vorgesehen sein, unter dem Wäschestück 10 ein Leuchtmittel oder auch mehrere Leuchtmittel vorzusehen, die die Unterseite 24 des Wäschestücks 10 mit sichtbarem Licht anstrahlen und vorzugsweise das Wäschestück 10 auch von unten durchleuchten. Das Wäschestück 10 wird dann mit Lichtstrahlen durchleuchtet und mit UV-Strahlen durchgängig bestrahlt.

Die folgende weitergehende Beschreibung bezieht sich auf alle vorstehend erläuterten Ausführungsbeispiele verschiedener Vorrichtungen gemäß den Fig. 1 bis 3.

Vor dem Gurtförderer 11 oder einem ersten Gurtförderer 32 können sich eine Sackförderanlage und/oder eine Vereinzelungseinrichtung befinden. Die einzelnen Wäschestücke werden dann ausgebreitet und im ausgebreiteten Zustand auf den Gurtförderer 11 oder den ersten Gurtförderer 32 aufgelegt. Das Ausbreiten der Wäschestücke kann durch eine entsprechende Ausbreiteinrichtung, vorzugsweise mit einer Mangeleingabemaschine, erfolgen.

Hinter dem Gurtförderer 11 oder dem letzten Gurtförderer 33 befindet sich mindestens eine Maschine zur Weiterverarbeitung der von der Vorrichtung hinsichtlich mindestens eines Kriteriums erfassten Wäschestücke 10. Hierbei kann es sich um eine Sortieranlage, eine Mangel, einen Finisher, einen Trockner oder Ähnliches handeln.

Nachfolgend wird das erfindungsgemäße Verfahren anhand der zuvor beschriebenen Vorrichtungen erläutert:
Im Bereich der Vorrichtung wird das jeweilige Wäschestück 10 oder ein sonstiger textiler Gegenstand einer für das menschliche Auge unsichtbaren elektro-magnetischen Strahlung ausgesetzt. Bei dieser elektro-magnetischen Strahlung handelt es sich bevorzugt um eine für das menschliche Auge unsichtbare hochfrequente elektro-magnetische Strahlung. Im Folgenden wird das Verfahren im Zusammenhang mit bevorzugt eingesetzten UV-Strahlen beschrieben.

Die UV-Strahlen machen vor allem unterschiedliche Gewebearten des Wäschestücks 10 sichtbar, so dass sie unterschieden werden können. Insbesondere werden Naturfasern und Kunstfasern unterscheidbar gemacht, indem Naturfasern sich in der Helligkeit der Farbe und/oder im Kontrast von Kunstfasern aufgrund der Bestrahlung mit UV-Strahlen unterscheiden. Insbesondere sind weiße Naturfasern von ebenso weißen Kunstfasern dadurch zu unterscheiden, dass das Bleichmittel, was zu weißen Naturfasern führt, vom UV-Licht für Kamera 17 bzw. 37 sichtbar gemacht wird, indem insbesondere Naturfasern von der Kamera 17, 37 heller aufgenommen werden als Kunstfasern.

Die Kamera 17 bzw. 37 der Vorrichtung erzeugt ein Abbild des von den UV-Strahlen bestrahlten bzw. durchstrahlten Bereichs des Wäschestücks 10. Die Kamera 17, 37 erzeugt Bilddaten. Dabei handelt es sich um unterschiedliche Bilddaten für hellere oder dunklere Fasern, insbesondere heller erscheinende Naturfasern bzw. farbige oder unterschiedlich farbige Fasern und/oder durch Gemische unterschiedlicher Fasern gebildete Muster. Durch entsprechende automatische Auswertung der von der Kamera 17, 37 erzeugten Bilddaten durch insbesondere eine elektronische Bildauswertungseinrichtung kann anhand unterschiedlicher Helligkeiten von Kunstfasern einerseits und Naturfasern andererseits festgestellt werden, ob es sich beim Wäschestück 10 um ein solches aus ausschließlich Naturfasern oder Kunstfasern oder ein Mischgewebe handelt. Beim Mischgewebe kann der Anteil der Natur- oder Kunstfasern im Gewebe des Wäschestücks 10 bestimmt werden durch Auswertung des für die Kamera 17, 37 dunkler bzw. heller erscheinenden Faseranteils.

Gegebenenfalls können die Wäschestücke 10 zusätzlich auch beleuchtet werden. Das kann vor allem bei farbigen Geweben vorteilhaft für die Farbauswertung sein. Das zusätzliche Beleuchten mit sichtbarem Licht kann aber auch dazu dienen, Messungenauigkeit oder Messfehler durch Fehlstellen oder Beschädigungen, wie zum Beispiel Löcher, in den Wäschestücken 10 auszuschalten und/oder solche Fehlstellen bzw. Löcher auch mittels der Kamera 17, 37 sichtbar zu machen.

Die von der Kamera 17, 37 in Verbindung mit mindestens der Bestrahlung mit UV-Licht ermittelten Kriterien des Wäschestücks 10, wie insbesondere die eines Naturfasergewebes oder eines Kunstfasergewebes, Mischgewebes und/oder farbigen Gewebes, können verwendet werden als Sortierkriterien zum nachfolgenden automatischen Sortieren der Wäschestücke 10.

Es ist auch denkbar, aus den in der zuvor beschriebenen Weise erhaltenen Bilddaten der Wäschestücke 10 nachfolgende Behandlungsmaschinen hinsichtlich der Behandlungsart der Wäschestücke automatisch einzustellen und/oder zu steuern, beispielsweise durch entsprechende Behandlungsprogramme für Wäschestücke 10 oder sonstiger textiler Gegenstände aus Naturfasern, aus Kunstfasern, aus Mischgewebe oder Buntwäsche. Dementsprechend kann beispielsweise der nachfolgende Waschvorgang in einer den aufgenommenen Kriterien entsprechenden Weise automatisch eingestellt oder gesteuert werden.

Die vorstehend beschriebene Verfahrensweise gilt auch für eine auf die Vorrichtung folgende Mangel, einen Finisher und/oder einen Trockner.

Das erfindungsgemäße Verfahren kann auch ein Wiegen der Wäschestücke 10 zur Bestimmung ihrer nachfolgenden Behandlung überflüssig machen. Das Gewicht der Wäschestücke kann danach ermittelt werden, ob mit der Vorrichtung und dem erfindungsgemäßen Verfahren festgestellt wurde, dass es sich bei den Wäschestücken 10 um solche aus Naturfasern oder aus leichteren Kunstfasern handelt. Auch bei Wäschestücken 10 aus Mischgeweben kann das Gewicht derselben anhand des festgestellten Anteils der Natur- bzw. Kunstfasern im Gewebe der Wäschestücke 10 ermittelt oder zumindest Rückschlüsse auf das Gewicht der Wäschestücke 10 gezogen werden.

Aufgrund der von den UV-Strahlen bestrahlten und/oder durchstrahlten Wäschestücken 10, die dabei von der Kamera 17 bzw. 37 erzeugten Bilddaten und die daraus gewonnenen Erkenntnisse über Farbunterschiede, Helligkeitsunterschiede und/oder Kontraste kann auch eine Qualitätsprüfung erfolgen. Beispielsweise lässt sich anhand der Helligkeit bzw. dunklen Naturfasern ein Rückschluss auf das Alter des betreffenden Wäschestücks 10 ziehen. Naturfasern werden mit der Zeit dunkler, so dass von der Kamera 17 bzw. 37 erfasste Naturfasern, die eigentlich heller erscheinen müssten, auf ein älteres oder häufiger benutztes Wäschestück 10 hindeuten, wenn sie statt dessen dunkler erscheinen.

Dunklere Stellen, insbesondere größere Bereiche, können auch auf Löcher und/oder Verschmutzungen des jeweiligen Wäschestücks 10 hinweisen. Solche Wäschestücke und auch Wäschestücke 10 mit überdurchschnittlich dunklen Bereichen können dann nach der Prüfung bzw. Kontrolle ausgesondert oder erneut behandelt werden. Gegebenenfalls können solche Wäschestücke 10 nicht mehr zum vorgesehenen Zweck eingesetzt werden.

**Bezugszeichenliste:**

| | | | |
|---|---|---|---|
| 10 | Wäschestück | 36 | Spalt |
| 11 | Gurtförderer | 37 | Kamera |
| 12 | Fördergurt | 38 | UV-Strahler |
| 13 | Umlenktrommel (vorn) | 39 | Gehäuse |
| 14 | Umlenktrommel (hinten) | 40 | Oberseite |
| 15 | Obertrum | | |
| 16 | Förderrichtung | | |
| 17 | Kamera | | |
| 18 | optische Achse | | |
| 19 | UV-Strahler | | |
| 20 | Strahlungshauptachse | | |
| 21 | Oberseite | | |
| 22 | Schnittpunkt | | |
| 23 | UV-Strahl | | |
| 24 | Unterseite | | |
| 25 | Leitblech | | |
| 26 | Schräge | | |
| 27 | Mittenabschnitt | | |
| 28 | Schräge | | |
| 29 | Raum | | |
| 30 | UV-Strahler | | |
| 31 | Gehäuse | | |
| 32 | Gurtförderer | | |
| 33 | Gurtförderer | | |
| 34 | Obertrum | | |
| 35 | Obertrum | | |

## Patentansprüche

1. Verfahren zur Ermittlung mindestens eines Kriteriums textiler Gegenstände, wobei von mindestens einer bildgebenden Einrichtung Bilddaten des jeweiligen textilen Gegenstands erzeugt werden und anhand der so erhaltenen Bilddaten das mindestens eine Kriterium des betreffenden textilen Gegenstands ermittelt wird, **dadurch gekennzeichnet, dass** wenigstens ein von der bildgebenden Einrichtung erfasster Bereich des jeweiligen textilen Gegenstands zumindest während der Erzeugung der Bilddaten dieses textilen Gegenstands einer für das menschliche Auge unsichtbaren elektro-magnetischen Strahlung ausgesetzt wird.

2. Verfahren nach Anspruch 1, **dadurch gekennzeichnet, dass** die unsichtbare elektro-magnetische Strahlung direkt auf den von der bildgebenden Einrichtung erfassten Bereich des jeweiligen textilen Gegenstands gerichtet wird.

3. Verfahren nach Anspruch 1, **dadurch gekennzeichnet, dass** der von der bildgebenden Einrichtung erfasste Bereich des jeweiligen textilen Gegenstands indirekt der unsichtbaren elektro-magnetischen Strahlung ausgesetzt wird.

4. Verfahren nach Anspruch 1, **dadurch gekennzeichnet, dass** eine der bildgebenden Einrichtung gegenüberliegende Seite des jeweiligen textilen Gegenstands der unsichtbaren elektro-magnetischen Strahlung ausgesetzt wird, wobei vorzugsweise die unsichtbare elektro-magnetische Strahlung derart ist, dass von ihr der textile Gegenstand durchstrahlt wird.

5. Verfahren nach einem der vorhergehenden Ansprüche, **dadurch gekennzeichnet, dass** von der bildgebenden Einrichtung nur oder auch die Emission, Absorption, Reflektion, Transmission und/oder Fluoreszenz der unsichtbaren elektro-magnetischen Strahlung erfasst wird, vorzugsweise bildhaft hinsichtlich eines Kontrasts, eines Musters, einer oder mehrerer Farben, Farbunterschiede und/oder Heiiigkeitsunterschiede.

6. Verfahren nach einem der vorhergehenden Ansprüche, **dadurch gekennzeichnet, dass** anhand der von der mindestens einen bildgebenden Einrichtung erhaltenen Bilddaten ermittelt wird, ob der textile Gegenstand aus Natur- oder Kunstfasern gebildet ist und/oder aus Mischgewebe.

7. Verfahren nach einem der vorhergehenden Ansprüche, **dadurch gekennzeichnet, dass** durch die unsichtbare elektro-magnetische Strahlung von der mindestens einen bildgebenden Einrichtung Naturfasern in einer anderen Helligkeit, einer anderen Farbe und/oder einem anderen Kontrast gegenüber Kunstfasern erfasst werden, insbesondere anhand des Kontrasts, Helligkeitsunterschieds und/oder Farbunterschieds aus den Bilddaten der Anteil der Kunstfaser im textilen Gegenstand ermittelt wird.

8. Verfahren nach einem der vorhergehenden Ansprüche, **dadurch gekennzeichnet, dass** die textilen Gegenstände unter Berücksichtigung der Feststellung, ob es sich um Kunstfasern, Naturfasern oder Mischgewebe handelt, sortenrein automatisch sortiert werden und/oder eine Steuerung bzw. Einstellung weiterer Be- und Verarbeitungsvorgänge der textilen Gegenstände erfolgt.

9. Verfahren nach einem der vorhergehenden Ansprüche, **dadurch gekennzeichnet, dass** anhand der Feststellung, ob es sich beim jeweiligen textilen Gegenstand um einen solchen aus Kunstfasern, Naturfasern und/oder Mischgewebe handelt, automatisch eine entsprechende Steuerung und/oder Einstellung mindestens einer nachfolgenden Behandlungsmaschine des betreffenden textilen Gegenstands erfolgt, vorzugsweise einer Waschmaschine, eines Trockners, einer Mangel und/oder eines Finishers.

10. Verfahren nach einem der vorhergehenden Ansprüche, **dadurch gekennzeichnet, dass** der betreffende textile Gegenstand einer unsichtbaren, elektro-magnetischen Strahlung im Hochfrequenzbereich, insbesondere einer ultravioletten Strahlung, ausgesetzt wird.
